(19) Europäisches Patentamt
European Patent Office
Office européen des brevets

(11) **EP 1 852 269 A1**

(12) **EUROPEAN PATENT APPLICATION**
published in accordance with Art. 158(3) EPC

(43) Date of publication:
**07.11.2007 Bulletin 2007/45**

(21) Application number: **06713406.4**

(22) Date of filing: **09.02.2006**

(51) Int Cl.:
***B41M 5/26*** (2006.01)      ***B32B 27/00*** (2006.01)
***B32B 27/30*** (2006.01)      ***B32B 27/36*** (2006.01)

(86) International application number:
**PCT/JP2006/302263**

(87) International publication number:
**WO 2006/087965 (24.08.2006 Gazette 2006/34)**

(84) Designated Contracting States:
**DE**

(30) Priority:   **21.02.2005   JP 2005043415**

(71) Applicant: **Techno Polymer Co., Ltd.**
**Tokyo 104-0041 (JP)**

(72) Inventors:
• **KAWAKAMI, Kazuyoshi**
**me, Chuou-ku, Tokyo 1040041 (JP)**

• **KURIMOTO, Hideyuki**
**me, Chuou-ku, Tokyo 1040041 (JP)**
• **KOTANI, Tomoyuki**
**-chome, Minato-ku, Tokyo 1080014 (JP)**
• **TAKAHIRA, Kazunori**
**-chome, Minato-ku, Tokyo 1080014 (JP)**

(74) Representative: **HOFFMANN EITLE**
**Patent- und Rechtsanwälte**
**Arabellastrasse 4**
**81925 München (DE)**

(54)   **LAMINATE FOR LASER MARKING**

(57)   The object of the present invention is to provide a laminate for laser marking which is useful for forming displays or indications, for example, on the surface of sheet-like molded products made of thermoplastic resins, by suitably employing thermoplastic polymer resins for laser marking, and whose slipping property on the production process can be improved and whose blocking problem at the storage in the stacked condition can be solved.

In an aspect of the present invention, there is provided a laminate for laser marking comprising a layer (A) and a layer (B) laminated on at least one side of layer (A), which layer (A) comprises a white or black coloring laser-marking thermoplastic resin, which layer (B) comprises a transparent thermoplastic resin and has a light transmittance of not less than 70% in the single layer, and the transparent thermoplastic resin in the layer (B) being subjected to anti-blocking treatment.

EP 1 852 269 A1

**Description**

TECHNICAL FIELD

The present invention relates to a laminate for laser marking.

BACKGROUND ART

Conventionally, various displays or indications (including characters, figures, symbols and combination thereof) have been formed on the surface of sheet-like thermoplastic resin molded products such as, for example, prepaid cards, by printing methods such as silk printing. However, in the printing methods, it is required to produce a printing plate for each display or indication, resulting in high costs and prolonged production time. In addition, there arises such a significant problem that defectives produced owing to displacement of the printing plate or bleeding of a printing ink are hardly recycled and, therefore, must be disposed of.

On the other hand, in recent years, there have been proposed thermoplastic polymer compositions for laser marking which are capable of forming monochromatic markings such as white color or black color on the surface of a resin product by irradiating a laser light thereto (refer to Patent Documents 1 and 2). These thermoplastic polymer resins for laser marking are molded into so-called thick-wall products such as household goods, electric appliances and OA equipments, and various displays or indications are formed on the surface of these products using a laser marking apparatus.

Further, there has been proposed a multi-layer sheet (laminate) for black coloring laser-marking comprising a surface skin layer comprising a transparent thermoplastic resin and an inner layer comprising a black coloring laser-marking thermoplastic resin (refer to Patent Document 3).

However, in the above proposal, there is only a brief explanation for employing a three-layer multi die method in the production process and there are still room for improvement on the production process.

　　Patent Document 1: Japanese Patent No. 3180587
　　Patent Document 2: Japanese Patent No. 3158947
　　Patent Document 3: Japanese Patent Application Laid-Open (KOKAI) No. 2002-273822

DISCLOSURE OF THE INVENTION

PROBLEM TO BE SOLVED BY THE INVENTION

In view of the above problems, an object of the present invention is to provide a laminate for laser marking which is useful for forming displays or indications, for example, on the surface of sheet-like molded products made of thermoplastic resins, by suitably employing thermoplastic polymer resins for laser marking, and whose slipping property on the production process can be improved and whose blocking problem at the storage in the stacked condition can be solved.

MEANS FOR SOLVING PROBLEM

In an aspect of the present invention, there is provided a laminate for laser marking comprising a layer (A) and a layer (B) laminated on at least one side of layer (A), which layer (A) comprises a white or black coloring laser-marking thermoplastic resin, which layer (B) comprises a transparent thermoplastic resin and has a light transmittance of not less than 70% in the single layer, and
the transparent thermoplastic resin in the layer (B) being subjected to anti-blocking treatment.

EFFECT OF THE INVENTION

According to the present invention, there can be provided a laminate for laser marking which is useful as for example, the means for providing an indication on the surface of sheet-like molding product comprising thermoplastic resin, and which is capable of improvement of slipping property on the production process and solving the blocking problem at the storage in the stacked condition.

DETAILED DESCRIPTION OF THE INVENTION

The present invention will be described in detail below. The laminate for laser marking according to the present invention comprises a layer (A) and a layer (B) laminated on at least one side of layer (A), which layer (A) comprises a white or black coloring laser-marking thermoplastic resin, which layer (B) comprises a transparent thermoplastic resin and has a light transmittance of not less than 70% in the single layer.

In the following description, a "(meth)acrylic acid ester" means both acrylic acid ester and (meth)acrylic acid ester, a "(rubber-reinforced) acryl-based thermoplastic resin" means both acryl-based thermoplastic resin and rubber-reinforced acryl-based thermoplastic resin, and a "(rubber-reinforced) styrene-based thermoplastic resin" means both styrene-based thermoplastic resin and rubber-reinforced styrene-based thermoplastic resin,

<u>\<White coloring laser-marking thermoplastic resin (1)\></u>

As the white coloring laser-marking thermoplastic resin (1), known resin compositions can be used with no limitation but a copolymer copolymerized with a (meth)acrylic acid ester, especially a rubber-reinforced graft copolymer is preferred. As concrete examples thereof, there are mentioned rubber-reinforced acryl-based thermoplastic resins (1) and (2) described in the above Japanese Patent No. 3180587.

The (rubber-reinforced) acryl-based thermoplastic resins are resins mentioned in the following 1 to 4. In case where the resin contains a rubber component, the content of rubber polymer in the resin is preferably 3 to 40% by weight, more preferably 4 to 30% by weight, the content of (meth)acrylic acid ester is preferably 10 to 97% by weight, more preferably 20 to 75% by weight and the content of other vinyl-based monomer is 0 to 87% by weight, more preferably 0 to 76% by weight. The graft percentage thereof is preferably 10 to 150%, more preferably 15 to 100%. The intrinsic viscosity [η] of an acetone-soluble component contained therein is preferably 0.2 to 1.2 dl/g, more preferably 0.3 to 0.8 dl/g. On the other hand, in case where the resin contains no rubber component, the content of (meth)acrylic acid ester in the resin is preferably 10 to 97% by weight, more preferably 20 to 75% by weight and the content of other vinyl-based monomer is 3 to 90% by weight, more preferably 25 to 80% by weight. The intrinsic viscosity [η] of an acetone-soluble component contained therein is preferably 0.2 to 1.2 dl/g, more preferably 0.3 to 0.8 dl/g.

<div align="center">Table 1</div>

1. Rubber-reinforced acryl-based thermoplastic resin comprising the below mentioned (1-1)
2. Acryl-based thermoplastic resin comprising the below mentioned (1-2)
3. Rubber-reinforced acryl-based thermoplastic resin comprising the below mentioned (1-1) and (1-2)
4. (Rubber-reinforced) acryl-based thermoplastic resin comprising the below mentioned (1-1) and/or (1-2) and the below mentioned (1-3) and/or (1-4)

When the content of (meth)acrylic acid ester is less than the above defined range, a sufficient clear white coloring laser-marking may not be obtained. On the other hand, when the content of (meth)acrylic acid ester is more than the above defined range, sufficient impact resistance may not be obtained. Further, the content of rubber polymer is less than the above defined range, the impact resistance may be deteriorated. On the other hand, when the content of rubber polymer is more than the above defined range, surface luster and moldability of resin may be deteriorated. When the graft percentage of rubber-reinforced acryl-based thermoplastic resin is less than the above defined range, the effect of addition of rubber component may not be sufficiently exhibited, for example sufficient impact resistance may not be obtained. On the other hand, when the graft percentage of rubber-reinforced acryl-based thermoplastic resin is more than the above defined range, the moldability may be deteriorated.

The above graft percentage (%) is the value calculated from the following formula:

$$\texttt{Graft Percentage (\%) = [(y - x)/x] x 100}$$

wherein x is an amount of a rubber component contained in 1 g of the rubber-reinforced acryl-based thermoplastic resin component; and y is an amount (g) of the methyl ethyl ketone-insoluble component in 1 g of the rubber-reinforced acryl-based thermoplastic resin component.

<u>Rubber-reinforced acryl-based graft copolymer (1-1):</u>

This rubber-reinforced acryl-based graft copolymer (1-1) is obtained by graft-polymerizing a (meth)acrylic acid ester and if necessary the other vinyl-based monomer in the presence of a rubber polymer. The content of rubber polymer is preferably 3 to 40% by weight, the content of (meth)acrylic acid ester is preferably 10 to 97% by weight, and the content of other vinyl-based monomer is preferably 0 to 87% by weight. The graft percentage thereof is preferably 10 to 150%.

The content of (meth)acrylic acid ester is more preferably 20 to 75% by weight, the content of other vinyl-based monomer is more preferably 0 to 76% by weight and the content of rubber polymer (the grafted component is not included) is more preferably 4 to 65% by weight. The graft percentage thereof is more preferably 20 to 120%.

The intrinsic viscosity [η] of an acetone-soluble component contained in the rubber-reinforced acryl-based graft copolymer (1-1) is measured in a methylethyl ketone solution at 30°C. If the intrinsic viscosity [η] is less than the above defined range, the impact resistance may not be sufficient. On the other hand, if the intrinsic viscosity [η] is more than the above defined range, the moldability may be deteriorated and this is not preferred.

As the above rubber polymer, there may be exemplified polybutadiene, butadiene-styrene copolymers, polyisoprene, butadiene-acrylonitrile copolymers, ethylene-propylene-(nonconjugated diene) copolymers, ethylene-butene-1-(nonconjugated diene) copolymers, isobutylene-isoprene copolymers, acrylic rubbers, styrene-butadiene-styrene block copolymers, styrene-butadiene-styrene radial tereblock copolymers, styrene-isoprene-styrene block copolymers, hydrogenated polymers of diene-based (block, random or homo) polymer such as SEBS, polyurethane rubbers, acrylic rubbers, silicone rubbers or the like. Of these rubber polymer, preferred are polybutadiene, butadiene-styrene copolymers, ethylene-propylene-(non-conjugated diene) copolymers, ethylene-butene-1-(non-conjugated diene) copolymers, hydrogenated polymers of diene-based polymer, acrylic rubbers and silicone rubbers.

Examples of the above (meth)acrylic acid esters may include methyl acrylate, ethyl acrylate, butyl acrylate, methyl methacrylate, ethyl methacrylate, butyl methacrylate, or the like. Of these (meth)acrylic acid esters, preferred is methyl methacrylate.

Examples of the other vinyl-based monomer may include aromatic vinyl compounds, cyanided vinyl compounds, maleic anhydride, maleimide-based compounds, or the like. Examples of the above aromatic vinyl compounds may include styrene, α-methyl styrene, methyl styrene, p-hydroxy styrene, α-ethyl styrene, methyl-α-methyl styrene, dimethyl styrene, bromostyrene, or the like. Of these aromatic vinyl compounds, preferred are styrene, methyl styrene and α-methyl styrene. Examples of the above cyanided vinyl compounds may include acrylonitrile, methacrylonitrile or the like. Of these cyanided vinyl compounds, preferred is acrylonitrile. Examples of the above maleimide compounds may include maleimide, N-methyl maleimide, N-ethyl maleimide, N-cyclohexyl maleimide, N-phenyl maleimide, N-(2-methylphenyl) maleimide, N-(4-hydroxyphenyl) maleimide, tribromophenyl maleimide or the like. Of these maleimide compounds, preferred are N-phenyl maleimide and N-cyclohexyl maleimide. As the other vinyl-based monomer, preferred are at least two selected from cyanided vinyl compounds, aromatic vinyl compounds, maleimide-based compounds and maleic anhydride. More preferred is aromatic vinyl compounds and/or cyanided vinyl compounds. The amount of cyanided vinyl compounds used is properly determined within such a range that it does not affect to white coloring property upon laser-marking.

The rubber-reinforced acryl-based graft copolymer (1-1) can be obtained by for example a method in which (meth)acrylic acid ester or (meth)acrylic acid ester and the other vinyl-based monomer is polymerized in the presence of rubber polymer by emulsion polymerization, solution polymerization, bulk polymerization or the like under a known polymerization condition.

Acryl-based (co)polymer (1-2):

This acryl-based (co)polymer (1-2) is a copolymer of homopolymer of (meth)acrylic acid ester and the other vinyl-based monomer copolymerizable with the(meth)acrylic acid ester. The content of (meth)acrylic acid ester in the acryl-based (co)polymer (1-2) is preferably 10 to 99% by weight, more preferably 20 to 98% by weight. The content of the other vinyl-based monomer is preferably 1 to 90% by weight, more preferably 2 to 80% by weight. The intrinsic viscosity [η] of an acetone-soluble component contained in the acryl-based (co)polymer (1-2) is preferably 0.2 to 1.2 dl/g, more preferably 0.3 to 0.8 dl/g.

As examples of the (meth)acrylic acid esters, there may be mentioned one described in the above explanation of (1-1). The other vinyl-based monomer is at least one selected from the group consisting of aromatic vinyl compounds, cyanided vinyl compounds, maleimide-based compounds and maleic anhydride. More preferred is aromatic vinyl compounds and/or cyanided vinyl compounds. As preferred examples of the other vinyl-based monomer, there may be mentioned one described in the above explanation of (1-1). Further, the amount of cyanided vinyl compounds used is properly determined within such a range that it does not affect to white coloring property upon laser-marking.

In the present invention, as the acryl-based copolymer, a soft copolymer as well as the above mentioned hard copolymer may be preferably used. As the soft copolymer, there are exemplified a copolymer comprising 30 to 80% by weight of methyl methacrylate, 20 to 50% by weight of (meth)acrylic acid ester other than methyl methacrylate and 0 to 50% by weight of other vinyl-based monomer. As the (meth)acrylic acid ester other than methyl methacrylate and other vinyl-based monomer, there may be used one described and used in the above (1-1). As the commercial product of methyl methacrylate/butyl acrylate/styrene-based copolymer, there is exemplified "Parapet SA-N" (trade name) manufactured by Kuraray Co., Ltd.

The above (1-2) can be obtained by bulk polymerization, solution polymerization, emulsion polymerization, suspension polymerization or the like under a known polymerization condition.

Rubber-reinforced styrene-based graft copolymer (1-3):

This rubber-reinforced styrene-based graft copolymer (1-3) is obtained by polymerizing vinyl-based monomers containing an aromatic vinyl compound in the presence of a rubber polymer with the proviso that excepting for the above (1-1). The content of rubber polymer in the rubber-reinforced styrene-based graft copolymer (1-3) is preferably 10 to 70% by weight, more preferably 10 to 65% by weight. The content of the vinyl-based monomer is preferably 30 to 90% by weight, more preferably 35 to 90% by weight. The graft percentage is preferably 10 to 150%, more preferably 5 to 100%. The intrinsic viscosity [η] of an acetone-soluble component contained in the rubber-reinforced styrene-based graft copolymer (1-3) is preferably 0.2 to 1.2 dl/g, more preferably 0.3 to 0.8 dl/g. As preferred examples of rubber polymer, there may be mentioned one described in the above explanation of (1-1).

As the vinyl-based monomer other than the aromatic vinyl compound, there are mentioned cyanided vinyl compounds, maleic anhydride, maleimide-based compounds or the like. As preferred examples of the vinyl-based monomer other than the aromatic vinyl compound, there may be mentioned one described in the above explanation of (1-1). The amount of cyanided vinyl compounds used is properly determined within such a range that it does not affect to white coloring property upon laser-marking. The above (1-3) can be obtained by bulk polymerization, solution polymerization, emulsion polymerization or the like under a known polymerization condition.

Styrene-based (co)polymer (1-4):

This styrene-based (co)polymer (1-4) is obtained by polymerizing vinyl-based monomers containing an aromatic vinyl compound with the proviso that excepting for the above (1-2). The intrinsic viscosity [η] of (1-3) is preferably 0.2 to 1.2 dl/g, more preferably 0.3 to 0.8 dl/g. As the vinyl-based monomer other than the aromatic vinyl compound, there are mentioned cyanided vinyl compounds, maleic anhydride, maleimide-based compounds or the like. Preferred vinyl-based monomers are cyanided vinyl compounds and/or maleimide-based compounds. As the vinyl-based monomer other than the aromatic vinyl compound, there may be mentioned one described in the above explanation of (1-1). The amount of cyanided vinyl compounds used is properly determined within such a range that it does not affect to white coloring property upon laser-marking. The above (1-4) can be obtained by bulk polymerization, solution polymerization, emulsion polymerization or the like under a known polymerization condition.

Into the white coloring laser-marking thermoplastic resin (1), if required, at least one polymer selected from polycarbonates, PPS, PPO, POM, polyamides, PBT, PET, polyvinyl chloride, polyolefins, polyacetals, epoxy resins, polyurethanes, polyvinylidene fluoride and thermoplastic elastomers can be blended. The preferred blending amount of the above mentioned polymer is 95 to 1% by weight based on 5 to 99% by weight of the above thermoplastic resin (1). Especially, by blending polycarbonates, PPS, PPO, POM, polyamides, PBT, PET, polyvinyl chloride, polyacetals, epoxy resins or polyurethanes, a material excellent in laser-marking ability can be obtained.

Incidentally, in case where the above (rubber-reinforced) acryl-based thermoplastic resin (1) contains a polycarbonate resin, the resin necessarily shows a specific nacreous luster caused by the difference of refractive index between the copolymer copolymerized with (meth)acrylic acid and polycarbonate resin. The generation of such nacreous luster is not preferable for white-coloring in a black color matrix. Therefore, in the present invention, in order to prevent the generation of such nacreous luster, it is recommended to use the following phosphate-based compound (C) as a compatibilizer of polycarbonate resin (A) and copolymer (B) copolymerizd with (meth)acrylic acid which phosphate compound (C) is described in Japanese Patent application No. 2004-267602. The phosphate-based compound (C) is represented by the following (C-1) and/or (C-2).

Table 2

| (C-1); | Compound having an aromatic group and a group containing ester bond |
| (C-2); | Combination of two compounds which are a compound having an aromatic group (C-2a) and a compound having a group containing ester bond (C-2a) |

Further, into the laser-marking thermoplastic resin (1) according to the present invention, there may be added stabilizers such as antioxidants and UV absorbers, lubricants such as silicone oils and low molecular weight polyethylenes, fillers such as calcium carbonate, talc, clay, titanium oxide, silica, magnesium carbonate, barium sulfate, calcium oxide, aluminum oxide, mica, glass beads, glass fibers and metal fillers, dispersants, foaming agents, colorants or the like. As the colorants, there are preferably exemplified carbon black, titanium black, black iron oxide or the like. The blending amount of black coloring material is preferably 0.01 to 10 parts by weight, more preferably 0.1 to 5 parts by weight based on 100 parts by weight of thermoplastic resin (1). By controlling the blending amount of black coloring material within the above range, the white coloring property upon laser-marking is excellent. Further, in order to control the coloring tone by the black coloring material, white coloring materials such as titanium oxide may be used together.

<Black coloring laser-marking thermoplastic resin (2)>

The black coloring laser-marking thermoplastic resin (2) comprises the following rubber-reinforced styrene-based graft copolymer (2-1) and/or styrene-based copolymer (2-2). In case where the thermoplastic resin (2) contains a rubber polymer, the content of rubber polymer is preferably 5 to 40% by weight, more preferably 5 to 30% by weight. The content of the aromatic vinyl compound (a) is preferably 10 to 85% by weight, more preferably 25 to 80% by weight. The content of cyanided vinyl compound (b) is preferably 10 to 50% by weight, more preferably 15 to 45% by weight. The content of other monomer (c) is preferably 0 to 70% by weight, more preferably 0 to 55% by weight. The graft percentage is preferably 10 to 150%, more preferably 15 to 100%. The intrinsic viscosity $[\eta]$ of an acetone-soluble component contained in the black coloring laser-marking thermoplastic resin (2) is preferably 0.2 to 1.2 d1/g, more preferably 0.3 to 0.8 dl/g. When the black coloring laser-marking thermoplastic resin (2) satisfies the above property ranges, it is excellent in balance of properties of impact resistance, black coloring and moldability.
In case where the above thermoplastic resin (2) contains no rubber polymer, the content of the aromatic vinyl compound (a) is preferably 50 to 90% by weight, more preferably 55 to 85% by weight. The content of cyanided vinyl compound (b) is preferably 10 to 50% by weight, more preferably 15 to 45% by weight. The content of other monomer (c) is preferably 0 to 40% by weight, more preferably 0 to 30% by weight. The intrinsic viscosity $[\eta]$ of an acetone-soluble component contained in the black coloring laser-marking thermoplastic resin (2) is preferably 0.2 to 1.2 dl/g, more preferably 0.3 to 0.8 dl/g. When the black coloring laser-marking thermoplastic resin (2) satisfies the above property ranges, it is excellent in balance of properties of black coloring and moldability.
The above other monomer (c) is at least one selected from the group consisting of (meth)acrylic acid esters, maleic anhydride and maleimide compounds. The kind and amount of other monomer (c) used are properly determined within such a range that it does not affect to black coloring property upon laser-marking.

Rubber-reinforced styrene-based graft copolymer (2-1):

The rubber-reinforced styrene-based graft copolymer (2-1) is obtained by polymerizing a monomer component (e) comprising the above component (a), component (b) and if necessary component (c) in the presence of rubber polymer (d). The graft percentage is preferably 10 to 150%, more preferably 15 to 100%. The intrinsic viscosity $[\eta]$ of an acetone-soluble component contained in the rubber-reinforced styrene-based graft copolymer (2-1) is preferably 0.2 to 1.2 dl/g, more preferably 0.3 to 0.8 dl/g. As the kinds of the rubber polymer, aromatic vinyl compound, cyanided vinyl compound and other monomer and also preferred embodiments thereof, there may be mentioned one described in the above explanation of (1-1). The above (2-1) can be obtained by bulk polymerization, solution polymerization, emulsion polymerization or the like under a known polymerization condition.

Styrene-based copolymer (2-2):

This styrene-based copolymer (2-2) is obtained by polymerizing the monomer component (e) comprising the above component (a), component (b) and if necessary component (c) in the presence of rubber polymer (d). The intrinsic viscosity $[\eta]$ of (2-2) is preferably 0.2 to 1.2 dl/g, more preferably 0.3 to 0.8 dl/g. As the kinds of the aromatic vinyl compound, cyanided vinyl compound and other monomer and also preferred embodiments thereof, there may be mentioned one described in the above explanation of (1-1). The above (2-1) can be obtained by bulk polymerization, solution polymerization, emulsion polymerization or the like under a known polymerization condition.
The above thermoplastic resin (2) is obtained by kneeding by use of various extruders, Banbury mixer, kneader, rolls, etc
Further, in order to attain a clear black coloring, the following metal containing compounds other than inorganic lead compounds can be added. Preferred metal elements are bismuth, nickel, zinc, calcium, copper, titanium, silicon, cobalt, iron or the like. As the metal containing compounds, there are exemplified oxides, hydroxides and organic metal compounds of these metal elements. As concrete examples, bismuth oxide as an inorganic compound, nickel formate, zinc borate, calcium borate, phosphoric acid-based zinc compounds, calcium silicate, bismuth hydroxide, basic bismuth carbonate, basic bismuth acetate, nickel hydroxide, copper nitrate, basic copper carbonate, copper thiocyanate, copper citrate, ferrous or ferric oxalate, black iron oxide, titanium oxide or the like, and by adding these, excellent black coloring can be attained. The blending amount of metal containing compounds other than inorganic lead compounds is usually 0.01 to 30 parts by weight, preferably 0.05 to 15 parts by weight, more preferably 0.1 to 10 parts by weight based on 100 parts by weight of thermoplastic resin (2). When the blending amount of metal containing compounds other than inorganic lead compounds is less than 0.01 parts by weight, the effect of black coloring may be slightly, and when it exceeds 30 parts by weight, the impact resistance thereof may be deteriorated.

Into the black coloring laser-marking thermoplastic resin (2), if required, at least one polymer selected from HIPS, polystyrene, polycarbonates, PPS, PPO, POM, polyamides, PBT, PET, polyvinyl chloride, polyolefins, polyacetals, epoxy resins, polyurethanes, polyvinylidene fluoride and thermoplastic elastomers can be blended. The preferred blending amount of the above mentioned polymer is 60 to 10% by weight based on 40 to 90% by weight of the above thermoplastic resin (2). Especially, by blending polycarbonates, PPS, PPO, POM, polyamides, PBT, PET, polyvinyl chloride, polyacetals, epoxy resins or polyurethanes, a material excellent in laser-marking ability can be obtained.

Further, into the laser-marking thermoplastic resin (1) according to the present invention, there may be added stabilizers such as antioxidants and UV absorbers, lubricants such as silicone oils and low molecular weight polyethylenes (including oxidized polyethylene waxes), fillers such as calcium carbonate, talc, clay, titanium oxide, silica, magnesium carbonate, carbon black, barium sulfate, calcium oxide, aluminum oxide, mica, glass beads, glass fibers and metal fillers, dispersants, foaming agents, colorants or the like.

As the colorants, there are preferably exemplified organic pigments, inorganic pigments except for inorganic lead pigments, dyes or the like. As the organic pigments, there are exemplified azo pigments selected from the group consisting of metal salts of monoazo compounds, disazo compounds and azo compounds of pyrazolone-based, 2,3-oxynaphthoylarylamide-based, 2,4,6-triamino-1,3-pyrimidine-based and 3-cyano-4-methyl-pyridone-based compounds; diazo pigments selected from the group consisting of pyrazolone-based and 2,3-oxynaphthoylarylamide-based compounds; other organic pigments such as a copper phthalocyanine and ultramarine blue pigment. As preferred inorganic pigments, there are exemplified Prussian blue, copper chromate, titanium black, titanium yellow or the like. As preferred dyes, there are exemplified black dyes containing carbon black or the like. Of these, titanium black, pyrazolone-based pigments, metal salts of azo compounds, titanium yellow and ultramarine blue pigment are preferred. The blending amount of colorant is usually 0.001 to 5 parts by weight, preferably 0.01 to 5 parts by weight based on 100 parts by weight of total weight of the above mentioned rubber-reinforced styrene-based thermoplastic resins.

<u><Transparent thermoplastic resin (b)></u>

The resin used as the transparent thermoplastic resin (b) is not particularly limited as long as the light transmittance of the resin in the form of a single layer used in the laminate is not less than 70%. Examples of the suitable transparent thermoplastic resin may include polyester resins, (methyl) methacrylate resins, polycarbonate resins, polyolefin resins, etc. Among these resins, preferred are polyester resins.

The light transmittance may be measured using a spectrophotometer "V-570" manufactured by Nippon Bunko Co., Ltd., by irradiating a light having a wavelength of 200 to 1,100 nm. In the present invention, the "light transmittance of not less than 70%" means that the light transmittance as measured by a light having at least one wavelength within the above-specified range is not less than 70%. The light transmittance of the transparent thermoplastic resin is preferably not less than 80% and more preferably not less than 90%. When the light transmittance of the transparent thermoplastic resin is less than 70%, the color development by the laser marking tends to be deteriorated.

The polyester resin preferably contains a terephthalic acid component in an amount of not less than 50 mol% based on whole dicarboxylic acid components contained in the resin, and an ethylene glycol component in an amount of not less than 50 mol% based on whole diol components contained in the resin.

Examples of the dicarboxylic acid components other than the terephthalic acid component may include aromatic dicarboxylic acids such as phthalic acid, isophthalic acid, 4,4'-diphenyldicarboxylic acid, 4,4'-diphenoxyethanedicarboxylic acid, 4,4'-diphenyletherdicarboxylic acid, 4,4'-diphenylsulfonedicarboxylic acid and 2,6-naphthalenedicarboxylic acid; alicyclic dicarboxylic acids such as hexahydroterephthalic acid and hexahydroisophthalic acid; and aliphatic dicarboxylic acids such as malonic acid, succinic acid, adipic acid, azelaic acid, sebacic acid and diglycolic acid. These acid components may be used alone or in combination of any two or more thereof.

Examples of the other diol components other than the ethylene glycol component may include aliphatic diols such as propylene glycol, trimethylene glycol, tetramethylene glycol, pentamethylene glycol, hexamethylene glycol, decamethylene glycol, neopentyl glycol and diethylene glycol; alicyclic diols such as 1,2-cyclohexane diol, 1,2-cyclohexane dimethanol, 1,3-cyclohexane dimethanol and 1,4-cyclohexane dimethanol; and aromatic diols such as pyrocatechol, resorcinol, hydroquinone, 4,4'-dihydroxybiphenyl, 2,2-bis(4'-hydroxyphenyl)propane, 2,2-bis(4'-β-hydroxyethoxyphenyl) propane, bis(4-hydroxyphenyl)sulfone and bis(4-β-hydroxyethoxyphenyl)sulfone. These diol components may be used alone or in combination of any two or more thereof.

Further, in the polyester resin, a monofunctional component such as hydroxycarboxylic acids or alkoxycarboxylic acids, e.g., glycolic acid, p-hydroxybenzoic acid and p-β-hydroxyethoxybenzoic acid, stearic acid, stearyl alcohol, benzyl alcohol, benzoic acid, t-butyl benzoic acid and benzoyl benzoic acid, or tri- or higher polyfunctional component such as trimellitic acid, trimesic acid, pyromellitic acid, trimethylol ethane, trimethylol propane, glycerol and pentaerythritol may also be used as a comonomer component. These comonomer components may be used alone or in combination of any two or more thereof.

Among the above components, the preferred dicarboxylic acid component other than the terephthalic acid component is isophthalic acid, and the preferred diol component other than the ethylene glycol component is 1,4-cyclohexane dimethanol (hereinafter referred to merely as "1,4-CHDM"). Further, among these resins, especially preferred is such a polyester resin comprising a dicarboxylic acid component containing terephthalic acid as a main component and a diol component containing ethylene glycol and 1,4-CHDM as main components in which the content of 1,4-CHDM is 15 to 50 mol% on the basis of the whole diol components. Examples of such a polyester resin may include "EASTER PETG Copolyester 6763 (tradename)" produced by Eastman Chemical Inc. Meanwhile, the term "main component(s)" used herein means that the content of the compound(s) is not less than 85 mol% and preferably not less than 90 mol% based on the respective components.

The transparent thermoplastic resin (b) is preferably subjected to anti-blocking treatment. The anti-blocking treatment may be achieved by surface-roughening treatment using inert particles. The surface-roughening treatment using inert particles may be conducted by either the method of blending the inert particles into the transparent thermoplastic resin (b) during the process for production of the laminate or the method of applying a coating solution containing the inert particles onto the laminate and then drying the applied solution. However, the former method exhibits a more remarkable effect of improving a slip property of the laminate during the process for production of the laminate.

Examples of the inert particles may include silicon oxide, titanium oxide, zeolite, silicon nitride, boron nitride, cerite, alumina, calcium carbonate, magnesium carbonate, barium carbonate, calcium sulfate, barium sulfate, calcium phosphate, lithium phosphate, magnesium phosphate, lithium fluoride, kaolin, talc and crosslinked polymer fine particles as described in Japanese Patent Publication (KOKOKU) No. 59-5216.

The average particle diameter of the inert particles is usually 1.0 to 10 $\mu$m and preferably 2.0 to 6.0 $\mu$m. When the average particle diameter of the inert particles is less than 1.0 $\mu$m, the effect of improving a slip property of the laminate tends to be insufficient. When the average particle diameter of the inert particles is more than 10 $\mu$m, the obtained transparent thermoplastic resin layer tends to be deteriorated in transparency. The content of the inert particles in the transparent thermoplastic resin layer is usually 0.05 to 2.0% by weight, preferably 0.1 to 1.5% by weight and more preferably 0.2 to 1.0% by weight. When the content of the inert particles is less than 0.05% by weight, the effect of improving a slip property of the laminate tends to be insufficient. When the content of the inert particles is more than 2.0% by weight, the obtained transparent thermoplastic resin layer tends to be deteriorated in transparency.

The inert particles may be blended in the transparent thermoplastic resin layer by conventionally known optional methods. For example, the inert particles may be added upon polymerization of the raw monomers or may be mixed in the transparent thermoplastic resin obtained after the polymerization using a blender. Further, there may also be used the method of mixing or blending a dilute solution of a master batch previously prepared which contains the inert particles at a high concentration, in the transparent thermoplastic resin.

The transparent thermoplastic resin layer may contain, in addition to the inert particles, various additives such as antistatic agents, stabilizers, lubricants and ultraviolet absorbers unless the addition thereof adversely affects a slip property and a transparency of the resultant laminate. Further, the surface of the transparent thermoplastic resin layer may be coated with antistatic agents or lubricants such as silicones and waxes. When applying the lubricant onto the surface of the transparent thermoplastic resin layer, in association with the surface-roughening treatment using the inert particles, a higher anti-blocking property can be imparted to the resultant laminate. More specifically, when the laminate sheets are stored in the stacked condition, blocking problems thereof can be fully solved.

An example of the suitable lubricants is dimethyl siloxane. The dimethyl siloxane is usually used in the form of an emulsion having a solid concentration of 1 to 5% by weight. The emulsion may be applied in a coating amount of 1 to 5 mL/m$^2$.

<u><Laminate></u>

The laminate of the present invention has a basic layer structure comprising a layer A and a layer B (A/B) in which the layer B is laminated on at least one surface of the layer A. Another layer structure of the laminate is comprising the layer B, layer A and layer B (B/A/B). In such a three layer structure, the two layers B may be formed from different kinds of transparent thermoplastic resins (b). Further, the other layer structure of the laminate includes a layer structure comprising the layer B, layer A and layer C (B/A/C) or a layer structure comprising the layer B, layer A, layer C and layer B (B/A/C/B). The layer C may be formed, for example, from a resin having an excellent light resistance, such as polymethyl methacrylate (PMMA). In the other preferred embodiment of the present invention, the laminate has a layer structure comprising the layer B, layer A and layer C (B/A/C).

The method for producing the laminate of the present invention is not particularly limited. The laminate may be usually produced by a co-extrusion method, for example, by feeding the respective material resins previously dried by an ordinary method into separate extruders, extruding the resins into a sheet therefrom through a multi-manifold die or a feed block die at a predetermined temperature, and then cooling solidifying the extruded sheet on a casting drum whose temperature is controlled to usually 0 to 80°C and preferably 10 to 50°C to form a laminated sheet. In this case, one or more touch rolls are preferably disposed in the vicinity of the casting drum and used as a pressing roll upon forming the sheet in order to obtain a laminate having a uniform thickness. Meanwhile, when the extruder is equipped with a vent port, it is possible to omit the drying step or shorten the drying time.

The melting temperature of the monochrome developing laser marking thermoplastic resin (a) is usually 200 to 260°C. The melting temperature of the transparent thermoplastic resin (b) varies depending upon kind of resin used. The polyester resin when used as the transparent thermoplastic resin (b) usually has a melting temperature of 240 to 310°C. The polycarbonate resin when used as the transparent thermoplastic resin (b) usually has a melting temperature of 280 to 320°C. The polyethylene resin when used as the transparent thermoplastic resin (b) usually has a melting temperature of 180 to 220°C. PMMA when used as the transparent thermoplastic resin (b) usually has a melting temperature of 260 to 320°C.

Also, the thicknesses of the respective layers of the laminate may be controlled by adjusting an amount of the molten resin discharged from the respective extruders. The thicknesses of the respective layers in the above layer structures varies depending upon embodiments of use of the laminate (i.e., whether the laminate is used as a film or a sheet). The thickness of the layer A is usually from 40 $\mu$m to 50 mm, whereas the thickness of each of the layer B and the layer C is usually from 5 $\mu$m to 5 mm. The ratio of the thickness of the layer A to the whole thickness of the laminate is usually 90 to 95%.

When applying an antistatic agent or a lubricant such as silicones and waxes on the surface of the thus obtained laminate, the laminate may be treated in an applying apparatus disposed on a downstream side of the casting drum. Thereafter, the laminate may be treated and dried, for example, in a dryer maintained at a temperature of 20 to 70°C for a residence time of 5 to 30 sec, and fed to a cutting apparatus through guiding rolls while keeping the laminate in a horizontal state so as not to undergo curling. In the cutting apparatus, the laminate is cut into a desired size and then stacked together. The thus obtained laminates in the form of a sheet product are packaged and then shipped.

The laminate of the present invention may be produced by not only the above co-extrusion method but also a dry lamination method or a coating method. For example, in the coating method, after producing a film or sheet corresponding to the layer A, a coating layer corresponding to the layer B or the layer C may be formed on the surface of the film or sheet.

The laser-marking to the laminate according to the present invention is conducted by the following way. As the laser, there may be used $CO_2$ laser, excimer laser, YAG laser or the like. Of these lasers, preferred is YAG laser.

The laminate according to the present invention which has been laser-marked by the irradiation of laser can be used for various applications. Especially, the B layer of laminate is a layer having laminating ability in case of adhering it to the other product so that the B layer can be used as a coating layer of adhesive or a fusion bonding layer. Therefore, the laminate according to the present invention can be used as prepaid cards, as well as promotional plates for advertisement by bonding it to a portion for example a rear side of taxi driver's seat.

EXAMPLES

The present invention is described in more detail by the following Examples, but these Examples are only illustrative and, therefore, not intended to limit the scope of the present invention. Meanwhile, in the following Examples and Comparative Examples, various properties were measured and evaluated by the following methods.

<1. Testing methods>

(1) Light transmittance:

A film having the same thickness as that of the surface layer was prepared, and a light transmittance of the film was measured using a spectrophotometer "V-570" manufactured by Nippon Bunko Co., Ltd., by irradiating a light having a wavelength of 600 nm thereto.

(2) Method for evaluation of laminate sheet:

(i) Evaluation of appearance of sheet:

A sheet having a width of 1000 mm and a length of 5 m which was obtained using an extruder was visually observed to evaluate an appearance thereof according to the following ratings.

Table 3
A:   No flow marks, etc., occurred, and usable without problems;
B:   Some flow marks occurred, but still usable without problems; and
C:   Severe flow marks occurred, and unusable as a commercial product.

(iii) Evaluation of development of white color:

Using a laser marking apparatus "Power Line-E" (1064 nm-type) manufactured by Roffin Berzel Inc., a sheet was color-developed at an output of 24.0 to 30.0 A, a frequency of 4.0 to 13.0 kHz and a scanning speed of 400 mm/s and visually observed to evaluate color development thereof according to the following ratings.

Table 4
A:   White color was visually recognized; and
B:   Development of white color was insufficient, or no color development occurred.

(iv) Evaluation of development of black color:

Using a laser marking apparatus "Power Line-E" (1064 nm-type) manufactured by Roffin Berzel Inc., a sheet was color-developed at an output of 24.0 to 30.0 A, a frequency of 4.0 to 13.0 kHz and a scanning speed of 400 mm/s and visually observed to evaluate color development thereof according to the following ratings.

Table 5
A:   Black color was visually recognized; and
B:   Development of black color was insufficient, or no color development occurred.

(v) Evaluation of surface smoothness:

A sheet having a width of 1000 mm and a length of 5 m which was obtained using an extruder was tested to evaluate a touch feed thereof according to the following ratings.

Table 6
A:   Smooth sheet surface without problems; and
B:   Irregularities occurred on laser-irradiated portions on the sheet surface with practical problems.

(vi) Evaluation of chemical resistance:

Marking portions exhibiting a white color or a black color were rubbed with a gauze impregnated with 1 mL of ethanol (first grade) for 200 strokes by applying a load of 1 kg thereto, and then visually observed to evaluate an appearance of a surface layer thereof according to the following ratings. Meanwhile, the time required for one rubbing stroke was set to 10 sec.

Table 7
A:   No change in appearance between before and after the test occurred, and usable without problems;
B:   Slight change in appearance between before and after the test occurred, but still usable without problems; and
C:   Cracks occurred, and unusable owing to practical problems.

(vi) Method for measuring coefficient of kinetic friction ($\mu$d):

Two laminates each cut into a width of 15 mm and a length of 150 mm were stacked together on a smooth glass plate, and further a rubber plate was superimposed thereon. Then, a weight load was placed on the rubber plate to adjust a contact pressure between the two laminates to 2 g/cm$^2$, and the laminates were allowed to mutually slip at a velocity of 20 mm/min in order to measure a friction force therebetween. The friction coefficient at a point at 5 mm slippage occurred was determined as a coefficient of kinetic friction ($\mu$d). The measurement was conducted using a friction measuring apparatus "TR-2" manufactured by Toyo Seiki Co., Ltd.

(vii) Heat sealability:

The two laminates described below were superimposed on each other, and sandwiched between protective sheets made of Teflon (registered trademark) from both outer surfaces thereof. The laminates were heat-sealed together at 140°C under a pressure of 5 kg/cm$^2$ for 10 sec using a bar sealer. Next, the protective sheets made of Teflon (registered trademark) were removed from the laminates, and then the laminates were cut into a strip shape such that a width of the heat-sealed portion thereof was 15 mm, thereby obtaining a sample for measurement of T-peel strength. The T-peel strength of the sample was measured using a tensile tester at a temperature of 30°C, a relative humidity of 50%, a distance between chucks of 100 mm and a pulling velocity of 300 mm/min. The measurement was conducted five times, and an average value of the five measured values was determined as a peel strength of the sample.

(viii) Evaluation of durability test for laser-marked surface:

The below-mentioned laminate was subjected to laser marking treatment, and the thus treated surface (having a length of 30 mm and a width of 30 mm) was repeatedly subjected to a keying test 1,000,000 times under a load of 2 kg. After the test, an appearance of the laminate was visually observed to evaluate a durability thereof according to the following ratings.

<div align="center">Table 8</div>

| | |
|---|---|
| A: | Excellent; |
| B: | Good (without practical problems); and |
| C: | Poor (deteriorated in clarity and recognizability with practical problems) |

<2. Materials used>

(1) Rubber-reinforced acrylic graft copolymer (A-1):

Rubber-reinforced acrylic graft copolymer comprising 30% by weight of polybutadiene rubber, 16% by weight of styrene, 49% by weight of methyl methacrylate and 5% by weight of acrylonitrile, which had a graft percentage of 65% and contained an acetone-soluble component having an intrinsic viscosity [η] of 0.48 dL/g (as measured at 30°C in a methyl ethyl ketone solvent).

(2) Rubber-reinforced styrene-based graft copolymer (A-2):

Rubber-reinforced styrene-based graft copolymer having a polybutadiene rubber content of 40% by weight, styrene content of 45% by weight, acrylonitrile content of 15% by weight, graft percentage of 60% and intrinsic viscosity [η] of acetone-soluble component contained therein of 0.45 dl/g measured in methylethyl ketone solvent at 30°C.

(3) Acrylic copolymer (A-3):

Acrylic copolymer comprising 21% by weight of styrene, 72% by weight of methyl methacrylate and 7% by weight of acrylonitrile, which had an intrinsic viscosity [η] of 0.49 dL/g (as measured at 30°C in a methyl ethyl ketone solvent).

(4) Styrene-based copolymer (A-4):

Styrene-based copolymer comprising 30% by weight of styrene and 40% by weight of acrylonitrile, which had an intrinsic viscosity [η] of 0.49 dL/g (as measured at 30°C in a methyl ethyl ketone solvent).

(5) Black substance (carbon black) (A-5):

"Mitsubishi Carbon #45" produced by Mitsubishi Chemical Corporation.

(6) Polyethylene terephthalate resin (B-1):

"EASTER PETG Copolyester 6763" (trade name) produced by Eastman Chemical Inc.

(7) Polyethylene terephthalate resin (B-2):

"UNIPET RT523" produced by Nippon Unipet Co., Ltd.

(8) Polycarbonate resin (B-3):

"NOVAREX 7022A" produced by Mitsubishi Engineering-Plastics Corporation.

(9) Acrylic resin (B-4):

"ACRYPET VH001" produced by Mitsubishi Rayon Co., Ltd.

(10) White polyethylene terephthalate resin (B-5):

The polyethylene terephthalate resin "UNIPET RT523" produced by Nippon Unipet Co., Ltd., was mixed with an anatase-type titanium oxide having an average particle diameter of 0.3 $\mu$m in such an amount that a content of titanium oxide in the resultant mixture was 3% by weight. The obtained mixture was melt-kneaded using a twin-screw extruder having an inner diameter of 30 mm at a cylinder temperature of 270°C to produce the aimed resin.

Example 1:

A mixture comprising 50 parts by weight of component (A-1), 40 parts by weight of component (A-3), 10 parts by weight of component (A-4) and 0.05 parts by weight of component (A-5) was melt-kneeded by use of an extruder having a cylinder diameter of 50 mm at cylinder temperature of 190 to 260°C to obtain a pellet (1) mainly used for an intermediate layer.

The above obtained pellet (1) was fed into a 120 mm$\phi$-double-screw extruder for the layer (A) having a vent port and the polyethylene terephthalate resin (B-1) was fed into a 65 mm$\phi$-double-screw extruder for the layer (B) having a vent port. Further, into the extruder for the layer (B), a masterbatch of polyethylene terephthalate resin (B-1) mixed with an amorphous silica particle having an average diameter of 4 $\mu$m in an amount of 5% by weight based on the weight of (B-1) was fed in such an amount that the silica particle concentration after mixing became 0.2% by weight based on the weight of polyethylene terephthalate resin (B-1) forming the layer (B).

The pellet (1) and polyethylene terephthalate resin (B-1) were extruded from T-die having a feed block at each temperature of 250°C and rapidly quenched onto a casting drum at a temperature of 40°C. By controlling the extrusion amount of each extruder, a two types-three layers (B/A/B) laminate was obtained. The thickness of layer (B) was 20 $\mu$m, thickness of layer (A) was 260 $\mu$m and the total thickness of layer (B) was 13% of the total thickness of sheet.

Next, an aqueous solution prepared by such a manner that dimethylsiloxane emulsion having a solid concentration of 30% by weight was diluted so that the solid concentration became 3% by weight was applied onto the surface of the above obtained laminate in an amount of 2 ml/m$^2$ and dried, and the coated laminate was cut into a prescribed length to obtain sheets (leaves). The obtained laminate sheet was evaluated by the above evaluation methods. The results are shown in Table 9.

Examples 2 to 4 and Comparative Examples 1 to 3:

The same procedure as defined in Example 1 was conducted except for using molding materials shown in Table 9 to obtain a laminate sheet. The obtained laminate sheet was evaluated by the same methods and the results are shown in Table 9.

Table 9

| | Example | | | |
|---|---|---|---|---|
| | 1 | 2 | 3 | 4 |
| Material of surface layer | (B-1) | (B-2) | (B-3) | (B-4) |
| Material of intermediate layer | Pellet (1) | Pellet (1) | Pellet (1) | Pellet (1) |
| Thickness of surface layer ($\mu$m) | 20 | 20 | 20 | 20 |
| Thickness of intermediate layer ($\mu$m) | 260 | 260 | 260 | 260 |
| Total sheet thickness ($\mu$m) | 300 | 300 | 300 | 300 |
| Light transmittance of surface layer (thickness: 20 $\mu$m) (%) | 91 | 90 | 92 | 93 |
| Appearance of sheet | A | A-B | A-B | A-B |
| Coloring property by laser-marking | A | A | A | A |
| Surface smoothness | A | A | A | A |
| Chemical resistance | A | A | B | B |
| Coefficient of dynamic friction ($\mu$d) | 0.31 | 0.30 | 0.45 | 0.32 |
| Peel strength (kg/15mm) | 2.25 | *2) | *2) | 0.10 |
| Durability of laser-marking surface | A | A | A | A |

*1): Measurement was impossible because of no slipping
*2): No adhesion

## Table 9 (Continued)

| | Comparative Example | | |
|---|---|---|---|
| | 1 | 2 | 3 |
| Material of surface layer | Pellet (1) | (B-5) | (B-1) |
| Material of intermediate layer | Pellet (1) | Pellet (1) | (B-1) |
| Thickness of surface layer ($\mu$m) | 20 | 20 | 20 |
| Thickness of intermediate layer ($\mu$m) | 260 | 260 | 260 |
| Total sheet thickness ($\mu$m) | 300 | 300 | 300 |
| Light transmittance of surface layer (thickness: 20 $\mu$m) (%) | 40 | 60 | 91 |
| Appearance of sheet | A | A-C | A |
| Coloring property by laser-marking | C | C | C |
| Surface smoothness | C | C | Not measured |
| Chemical resistance | B-C | Not measured | Not measured |
| Coefficient of dynamic friction ($\mu$d) | *1) | 0.30 | 0.31 |
| Peel strength (kg/15mm) | 2.34 | *2) | 2.20 |
| Durability of laser-marking surface | C | Not measured | Not measured |

*1): Measurement was impossible because of no slipping
*2): No adhesion

The laminates in Examples 1 to 4 were white coloring laminates according to the present invention and were capable of achieving the objects of the present invention. On the other hand, the laminates in Comparative Examples 1 and 2 used materials in the surface layer, which is out of scope of the present invention. In case of Comparative Example 1, the coloring property by laser-marking, surface smoothness, chemical resistance, coefficient of dynamic friction and durability of the laser-marking surface were deteriorated. In case of Comparative Example 2, the coloring property by laser-marking, surface smoothness and adhesion property were deteriorated. In case of Comparative Example 3, the coloring property by laser-marking was deteriorated.

Examples 5 to 8 and Comparative Examples 4 to 6:

A mixture comprising 40 parts by weight of component (A-2) and 60 parts by weight of component (A-4) was melt-kneeded by use of an extruder having a cylinder diameter of 50 mm at cylinder temperature of 190 to 260°C to obtain a pellet (2) mainly used for an intermediate layer. Thereafter, the same procedure as defined in Example 1 was conducted except for using molding materials shown in Table 10 to obtain a laminate sheet. The obtained laminate sheet was evaluated by the same methods and the results are shown in Table 10.

<u>Table 10</u>

|  | Example | | | |
|---|---|---|---|---|
|  | 5 | 6 | 7 | 8 |
| Material of surface layer | (B-1) | (B-2) | (B-3) | (B-4) |
| Material of intermediate layer | Pellet (2) | Pellet (2) | Pellet (2) | Pellet (2) |
| Thickness of surface layer ($\mu$m) | 20 | 20 | 20 | 20 |
| Thickness of intermediate layer ($\mu$m) | 260 | 260 | 260 | 260 |
| Total sheet thickness ($\mu$m) | 300 | 300 | 300 | 300 |
| Light transmittance of surface layer (thickness: 20 $\mu$m) (%) | 91 | 90 | 92 | 93 |
| Appearance of sheet | A | A-B | A-B | A-B |
| Coloring property by laser-marking | A | A | A | A |
| Surface smoothness | A | A | A | A |
| Chemical resistance | A | A | B | B |
| Coefficient of dynamic friction ($\mu$d) | 0.31 | 0.30 | 0.46 | 0.31 |
| Peel strength (kg/15mm) | 2.27 | *2) | *2) | 0.09 |
| Durability of laser-marking surface | A | A | A | A |

*1): Measurement was impossible because of no slipping
*2): No adhesion

## Table 10 (Continued)

| | Comparative Example | | |
|---|---|---|---|
| | 4 | 5 | 6 |
| Material of surface layer | Pellet (2) | (B-5) | (B-1) |
| Material of intermediate layer | Pellet (2) | Pellet (2) | (B-1) |
| Thickness of surface layer ($\mu$m) | 20 | 20 | 20 |
| Thickness of intermediate layer ($\mu$m) | 260 | 260 | 260 |
| Total sheet thickness ($\mu$m) | 300 | 300 | 300 |
| Light transmittance of surface layer (thickness: 20 $\mu$m) (%) | 40 | 60 | 91 |
| Appearance of sheet | A | A-C | A |
| Coloring property by laser-marking | C | C | C |
| Surface smoothness | C | C | Not measured |
| Chemical resistance | B-C | Not measured | Not measured |
| Coefficient of dynamic friction ($\mu$d) | *1) | 0.30 | 0.31 |
| Peel strength (kg/15mm) | 2.34 | *2) | 2.20 |
| Durability of laser-marking surface | C | Not measured | Not measured |

*1): Measurement was impossible because of no slipping
*2): No adhesion

The laminates in Examples 5 to 8 were black coloring laminates according to the present invention and were capable of achieving the objects of the present invention. On the other hand, the laminates in Comparative Examples 4 and 5 used materials in the surface layer, which is out of scope of the present invention. In case of Comparative Example 4, the coloring property by laser-marking, surface smoothness, chemical resistance, coefficient of dynamic friction and durability of the laser-marking surface were deteriorated. In case of Comparative Example 5, the coloring property by laser-marking, surface smoothness and adhesion property were deteriorated. In case of Comparative Example 6, the coloring property by laser-marking was deteriorated.

## Claims

1.   A laminate for laser marking comprising a layer (A) and a layer (B) laminated on at least one side of layer (A), which layer (A) comprises a white or black coloring laser-marking thermoplastic resin, which layer (B) comprises a transparent thermoplastic resin and has a light transmittance of not less than 70% in the single layer, and

the transparent thermoplastic resin in the layer (B) being subjected to anti-blocking treatment.

2. A laminate for laser marking according to claim 1, wherein the layer (A) comprises the white coloring laser-marking thermoplastic resin comprising a copolymer copolymerized with a (meth)acrylic acid ester.

3. A laminate for laser marking according to claim 1, wherein the layer (A) comprises the black coloring laser-marking thermoplastic resin comprising a copolymer copolymerized with a cyanided vinyl compound.

4. A laminate for laser marking according to claim 2 or 3, wherein the copolymer is a rubber-reinforced graft copolymer.

5. A laminate for laser marking according to any one of claims 1 to 4 wherein the transparent thermoplastic resin in the layer (B) is a polyester resin.

6. A laminate for laser marking according to claim 5, wherein the percentage of 1,4-cyclohexanedimethanol contained in the whole diol components in the polyester resin is 15 to 50 mol%.

7. A laminate for laser marking according to any one of claims 1 to 6 having film shape or sheet shape.

8. A laminate for laser marking according to any one of claims 1 to 7, having an indication comprising white or black coloring formed by a laser irradiation.

## INTERNATIONAL SEARCH REPORT

| | International application No. |
|---|---|
| | PCT/JP2006/302263 |

A. CLASSIFICATION OF SUBJECT MATTER
*B41M5/26*(2006.01), *B32B27/00*(2006.01), *B32B27/30*(2006.01), *B32B27/36*
(2006.01)

According to International Patent Classification (IPC) or to both national classification and IPC

B. FIELDS SEARCHED

Minimum documentation searched (classification system followed by classification symbols)
B32B27/00, B32B27/30, B32B27/36, B41M5/26

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-273832 A  (Nippon Kararingu Kabushiki Kaisha), 25 September, 2002 (25.09.02), Claims 1 to 2; Par. Nos. [0006], [0008], [0010], [0022], [0025], [0032] to [0035]; examples (Family: none) | 1-8 |
| Y | JP 9-164625 A  (Bando Chemical Industries, Ltd.), 24 June, 1997 (24.06.97), Par. Nos. [0004], [0006], [0018] to [0019], [0033] to [0034]; examples; Par. No. [0039]; Figs. 1, 5 to 6 (Family: none) | 1-8 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 April, 2006 (10.04.06) | 18 April, 2006 (18.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2006/302263 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-198903 A  (Toray Industries, Inc.), 18 July, 2000 (18.07.00), Par. Nos. [0001], [0040] to [0041], [0052]; table 1; Par. Nos. [0055] to [0056]; examples (Family: none) | 2,4 |
| Y | JP 2001-302872 A  (Toray Industries, Inc.), 31 October, 2001 (31.10.01), Par. Nos. [0001], [0045], [0047], [0048] to [0050], [0052]; examples (Family: none) | 3 |
| A | JP 2001-191692 A  (Lion Corp.), 17 July, 2001 (17.07.01), Full text; all drawings (Family: none) | 1-8 |
| A | JP 3-270980 A  (Dainippon Ink And Chemicals, Inc.), 03 December, 1991 (03.12.91), Full text (Family: none) | 1-8 |
| P,A | JP 2005-144784 A  (Toppan Printing Co., Ltd.), 09 June, 2005 (09.06.05), Full text; all drawings (Family: none) | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3180587 B
- JP 3158947 B
- JP 2002273822 A
- JP 2004267602 A
- JP 59005216 A